# EUROPEAN PATENT SPECIFICATION

(11) **EP 2 883 437 B1**
(45) Date of publication and mention of the grant of the patent: **28.03.2018**
(21) Application number: 14194857.0
(22) Date of filing: 26.11.2014
(51) Int. Cl.: A01D 34/00

(54) **Method and apparatus for cutting grass**
Verfahren und Vorrichtung zum Schneiden von Gras
Méthode et appareil pour couper l'herbe

(30) Priority: 16.12.2013 IT MI20132099
(43) Date of publication of application: 17.06.2015
(73) Proprietor: Bernini, Fabrizio, 52021 Bucine - Arezzo (IT)
(72) Inventor: Bernini, Fabrizio, 52021 Bucine - Arezzo (IT)
(74) Representative: Tansini, Elio Fabrizio

(56) References cited:
- EP-A1- 1 228 681
- DE-A1- 19 926 744
- DE-A1-102011 085 565
- US-A- 4 887 415

## Description

### TECHNICAL FIELD

The present invention concerns a method and an apparatus for cutting grass.

In particular, the present invention concerns a method and an apparatus for cutting grass that is set up to monitor its own position constantly during operation so as to detect an anomalous position thereof.

### PRIOR ART

As is well known, grass-cutting apparatuses such as robotic lawn-mowers are used for maintaining lawns, gardens and grassy areas in general in optimal condition, that is, for keeping the grass below a given height in a substantially homogeneous manner throughout the entire cutting area.

The efficiency of these lawn-mowers often depends on the conditions of the surface being cut, which can determine operating anomalies such as sliding, stoppage following an impact, lifting, etc.

In these cases, the lawn-mower no longer carries out its functions.

Prior art solutions utilize a strain gauge to detect the position of the lawn-mower and resulting movement-related anomalies.

Such solutions are inefficient because they are not capable of detecting all the possible irregular conditions that can arise.

Patent Application no. DE102011085565 A1 illustrates a method in accordance with the preamble of claim 1.

An aim of the present invention is to offer a method and an apparatus for cutting grass that are capable of correctly determining the position of the lawn-mower under conditions in which operating anomalies are present.

A specific aim of the present invention is to offer a method and an apparatus for cutting grass that are capable of determining the nature of the operating anomalies of the lawn-mower.

A further aim of the present invention is to offer a method and an apparatus for cutting grass that are capable of ensuring safety of the lawn-mower even under conditions in which operating anomalies are present.

An additional aim of the present invention is to offer a method and an apparatus for cutting grass that are capable of ensuring minimum energy consumption even under conditions in which operating anomalies are present.

### SUMMARY OF THE INVENTION

In a first aspect of the invention, these and further aims are substantially achieved by a method of identifying an anomalous position of an apparatus for cutting grass, in which the method comprises the steps of:
preparing the apparatus for cutting grass, in which the apparatus comprises a lawn-mower provided with one or more blades for cutting grass and a movement means configured to move the lawn-mower over a movement surface, and in which the movement means comprises at least one drive wheel capable of moving at a preset speed, and at least one driven wheel capable of moving by friction with the movement surface at a variable speed;
continuously monitoring a movement of the lawn-mower over the movement surface, in which the monitoring step comprises:
   setting the speed of the at least one drive wheel;
   continuously detecting the actual speeds of the at least one drive wheel and the at least one driven wheel, respectively;
   comparing the actual speeds detected, thereby determining a representative comparison value of these speeds;
   identifying an anomalous operating status of the lawn-mower as a function of the representative comparison value, if the first representative comparison value is different from a predefined value representative of a regular movement of the lawn-mower;
   identifying, in the anomalous operating status, a type of anomaly as a combined function of the representative comparison value and the predefined value, thereby identifying an anomalous operation of the lawn-mower relative to a movement surface.

The step of preparing the apparatus for cutting grass preferably comprises a step of arranging a driven wheel comprising permanent magnets.

The step of preparing the apparatus for cutting grass preferably comprises a step of arranging a sensor configured to monitor a rolling of the at least one driven wheel, by detecting a shift of said permanent magnets.

The method of identifying an anomalous position preferably comprises the step of detecting a corresponding actual speed of the at least one driven wheel as a function of the rolling thereof.

The method of identifying an anomalous position preferably comprises the step of mounting the sensor in the lawn-mower in proximity to the at least one driven wheel.

The method of identifying an anomalous position preferably comprises the step of providing a sensor that is a contactless sensor.

The method of identifying an anomalous position preferably comprises the step of detecting magnetic field variations by means of the sensor, the latter comprising a magnetic induction-type encoder, as a function of a movement of the permanent magnets in the at least one driven wheel, where the magnetic field variation is representative of a rolling of the driven wheel.

The method of identifying an anomalous position preferably comprises the step of identifying a first type of anomaly, if:
the actual speed substantially coincides with the preset speed of the at least one drive wheel;
the actual speed is much greater than the actual speed of the at least one driven wheel, such as to consider the actual speed of the at least one driven wheel negligible compared to the actual speed of the at least one drive wheel.

The method of identifying an anomalous position preferably comprises the step of identifying a second type of anomaly, if
- the actual speed of the at least one drive wheel is equal to a percentage value of the preset speed;
- the actual speed of the at least one drive wheel is much greater than the actual speed of the at least one driven wheel.

The method of identifying an anomalous position preferably comprises the step of arranging a timer and identifying a third type of anomaly, if:
at a first instant of detecting time, identified by the timer, the actual speed of the at least one drive wheel is equal to the actual speed of the at least one driven wheel, the speeds both being not null;
at a second instant of detecting time, identified by the timer and following the first instant of time, the actual speed of the at least one drive wheel is equal to the actual speed of the at least one driven wheel, the speeds both being null;
the timer compares the values of the first and second instants of time and determines a corresponding stop interval;
the stop interval is shorter than a predefined stop interval.

The method of identifying an anomalous position preferably comprises the step of restoring operation of the lawn-mower as a function of the type of anomaly detected.

The method of identifying an anomalous position preferably comprises the step of identifying a regular operating status of the lawn-mower as a function of the representative comparison value, if the first representative comparison value substantially coincides with the predefined value representative of a regular movement of the lawn-mower.

In a second aspect of the invention, the aims defined hereinabove and other aims are achieved also by an apparatus for cutting grass that is adapted to implement the method of identifying an anomalous position and in which the apparatus comprises a lawn-mower provided with:
one or more blades for cutting grass;
movement means configured to move the lawn-mower over a movement surface, in which the movement means comprises at least one drive wheel capable of moving at a preset speed, and at least one driven wheel capable of moving by friction with said movement surface at a variable speed;
a control unit configured to continuously control the movement of the lawn-mower, and in which the control unit comprises:
a configuration module configured to set the speed of the at least one drive wheel;
a detecting module configured to continuously detect actual speeds of the at least one drive wheel and at least one driven wheel, respectively;
a first comparison module configured to:
   compare the actual speeds detected, thereby determining a representative comparison value of the actual detected speeds;
   a diagnosis module configured to
   identify an anomalous operating status of the lawn-mower as a function of the representative comparison value, if the first representative comparison value is different from a predefined value representative of a regular movement of the lawn-mower;
   a second comparison module configured to identify, in the anomalous operating status, a type of anomaly as a combined function of the representative comparison value and the predefined value, the type of anomaly identifying an anomalous operation of the lawn-mower relative to the movement surface.

The driven wheel preferably comprises permanent magnets.

The lawn-mower preferably comprises a sensor configured to monitor a rolling of the at least one driven wheel, by detecting a shift of said permanent magnets.

Preferably, the detecting module is connected to the sensor and configured to detect a corresponding actual speed of the at least one driven wheel as a function of the rolling thereof.

The sensor is preferably mounted in the lawn-mower in proximity to the at least one driven wheel.

The sensor preferably comprises a magnetic induction-type encoder configured to detect magnetic field variations as a function of a movement of the permanent magnets in the at least one driven wheel, where the magnetic field variation is representative of a rolling of the driven wheel. The second comparison module is preferably configured to identify a first type of anomaly, if:
the actual speed substantially coincides with the preset speed of the at least one drive wheel;
the actual speed is much greater than the actual speed of the at least one driven wheel, such as to consider the actual speed of the at least one driven wheel negligible compared to the actual speed of the at least one drive wheel.

The second comparison module is preferably configured to identify a second type of anomaly, if:
the actual speed of the at least one drive wheel is equal to a percentage value of the preset speed;
the actual speed of the at least one drive wheel is much greater than the actual speed of the at least one driven wheel.

Preferably, the second comparison module comprises a timer and the comparison module is configured to identify a third type of anomaly, if:
at a first instant of detecting time, identified by the timer, the actual speed of the at least one drive wheel is equal to the actual speed of the at least one driven wheel, the speeds both being not null;
at a second instant of detecting time, identified by the timer and following the first instant of time, the actual speed of the at least one drive wheel is equal to the actual speed of the at least one driven wheel, the speeds both being null;
the timer compares the values of the first and second instants of time and determines a corresponding stop interval;
the stop interval is shorter than a predefined stop interval.

The control unit preferably comprises an operational module configured to restore operation of the lawn-mower as a function of the type of anomaly detected.

The diagnosis module is preferably configured to identify a regular operating status of the lawn-mower as a function of the representative comparison value, if the first representative comparison value substantially coincides with the predefined value representative of a regular movement of the lawn-mower.

The apparatus/method, according to the invention, achieves the following principal technical effects in one or more of its aspects:
- correct determination of the position of the lawn-mower under conditions in which operating anomalies are present;
- determination of the nature of the operating anomalies of the lawn-mower;
- ensuring safety of the lawn-mower even under conditions in which operating anomalies are present;
- ensuring minimum energy consumption even under conditions in which operating anomalies are present.

The above-mentioned technical effects and other technical effects of the invention shall emerge in further detail from the description provided herein below of example embodiments by way of approximate and nonlimiting example with reference to the attached drawings.

### BRIEF DESCRIPTION OF THE DRAWINGS

- Figure 1a is a perspective view, in schematic form, of a lawn-mower that is part of the apparatus according to the present invention;
- Figure 1b is a second perspective view, in schematic form, of the lawn-mower of Figure 1a;

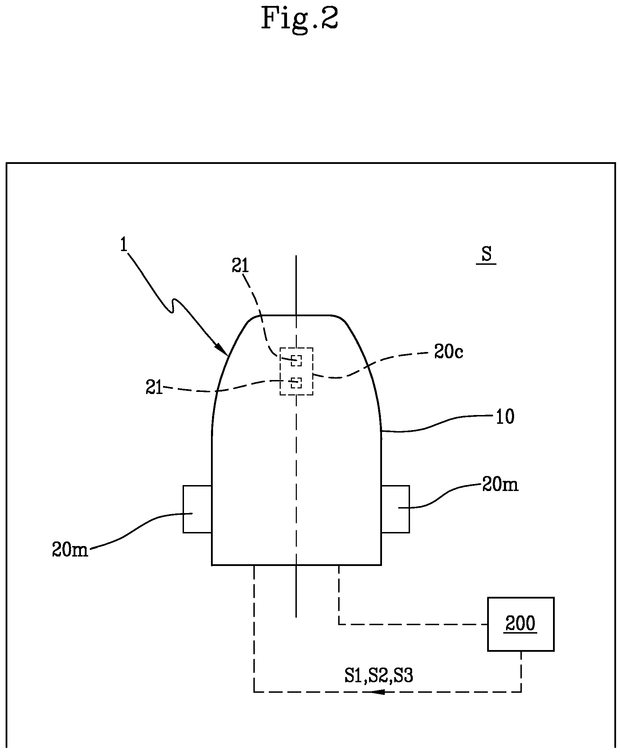

- Figure 2 is a schematic view of the apparatus according to the present invention;
- Figure 3 is a block diagram of the apparatus of Figure 2.

### DETAILED DESCRIPTION

The invention describes a method of identifying an anomalous position of an apparatus for cutting grass, in which the latter comprises a lawn-mower provided with one or more blades for cutting grass and a movement means comprising at least one drive wheel and at least one driven wheel, a control unit configured to continuously control the movement of the lawn-mower and configured to identify an anomalous operating status of the lawn-mower and identify a corresponding type of operating anomaly.

With reference to the figures, the apparatus 100 for cutting grass, of the invention, comprises a lawn-mower 1 provided with one or more blades for cutting grass and movement means 20 configured to move the lawn-mower 1 over a movement surface S.

The movement means 20 comprises at least one drive wheel 20m.

A wheel is to be understood as a "drive wheel" if it can be moved by a motor and by friction with the ground.

The at least one drive wheel 20m is capable of moving at a preset speed Vm.

In the figures of the invention, two drive wheels 20m are shown by way of example. However, this does not exclude the possibility that there may be only one or more than two drive wheels.

The movement means 20 comprises at least one driven wheel 20c.

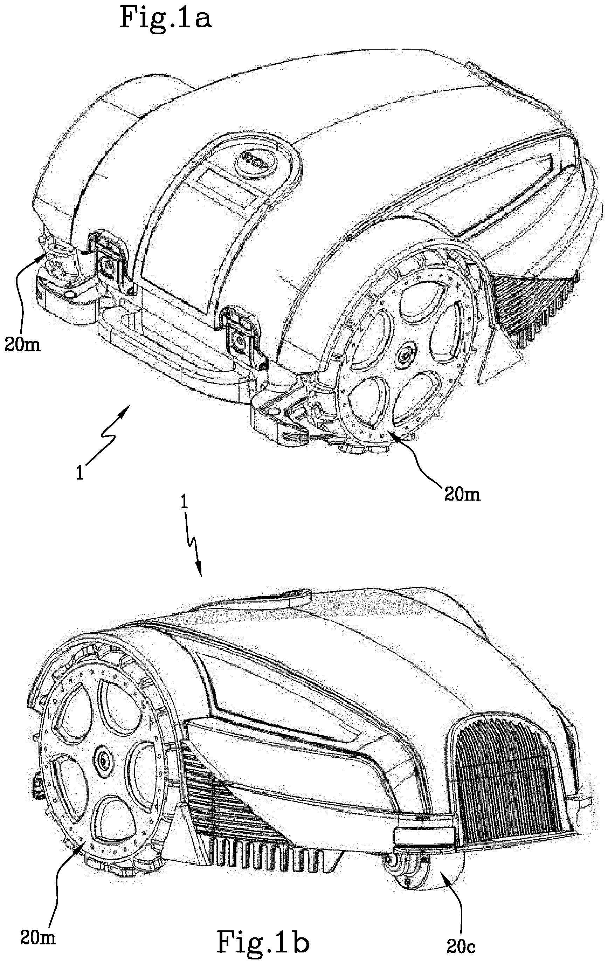

In a preferred embodiment of the invention (Fig. 1b), the movement means 20 comprises a driven wheel 20c.

A driven wheel is understood as a wheel that is free to move without any connection to a drive unit. In other words, a driven wheel is understood as being capable of being moved only by friction with a movement surface, for example the ground.

A driven wheel can also be defined as a "free" wheel.

Furthermore, the driven wheel can also be a wheel that pivots.

The driven wheel 20c is capable of moving by friction with a movement surface S at a variable speed Vc.

Advantageously, according to the invention, the driven wheel 20c comprises permanent magnets 21.

The technical effect achieved is that of generating a magnetic field variation during rolling that can be detected so as to monitor the operation of the lawn-mower.

The lawn-mower 1 further comprises a sensor 30 configured to monitor a rolling of the at least one driven wheel 20c, by detecting a shift of the permanent magnets 21.

Advantageously, according to the invention, the sensor 30 is mounted in the lawn-mower 1 in proximity to the at least one driven wheel 20c. Advantageously, according to the invention, the sensor 30 is a contactless sensor.

In other words, the sensor 30 is not in contact with the driven wheel 20c, but detects signals, particularly signals pertaining to magnetic field variation, which are generated by the driven wheel 20c.

The contactless sensor functions up to a distance of 10 cm from the driven wheel 20c.

Advantageously, according to the invention, the sensor 30 comprises a magnetic induction-type encoder configured to detect magnetic field variations ΔB as a function of a movement of the permanent magnets 21 in the at least one driven wheel, where the magnetic field variation ΔB is representative of a rolling of the at least one driven wheel 20c.

In other words, the magnetic field variation ΔB is representative of a rolling of the driven wheel 20c brought about by movement of the lawn-mower 1 under normal RW or anomalous AW operating conditions.

In particular, the magnetic induction-type encoder is an incremental magnetic encoder.

In other words, this encoder is capable of communicating the angular position of the at least one driven wheel 20c and converting it into electric signals.

The technical effect achieved with respect to a standard encoder lies in its capacity to detect the movement of the at least one driven wheel 20c in any position and angle it may be found with respect to the encoder, provided that it is within the range of the magnetic field generated by the rolling of the wheel.

In other words, the area of operation of the sensor can be considered as a sphere of the dimensions of the magnetic field generated by the object whose movement we wish to detect (the driven wheel 20c) and not a circle or a line as occurs in the case of standard encoders.

The apparatus 100 according to the invention comprises a control unit 200 configured to continuously control the movement of the lawn-mower.

In particular, the control unit 200 is configured to continuously control the movement of the lawn-mower as a function of magnetic field variations induced by a rolling of the at least one driven wheel 20c.

The control unit 200 may be positioned on board the lawn-mower 1 or in another position in the apparatus 100 of the invention according to particular design specifications.

In general, it should be noted that in the present context and in the claims herein below, the control unit 200 is presented as sub-divided into distinct functional modules (memory modules or operational modules) for the sole purpose of providing a clear and complete description of the functions of the unit.

This control unit can actually consist of a single electronic device (or board) suitably programmed to perform the functions described, and the various modules can be hardware entities and/or routine software that are part of the programmed device.

Alternatively or additionally, these functions can be performed by a plurality of electronic devices on which the above-mentioned functional modules can be distributed.

The control unit can also make use of one or more processors for the execution of the instructions contained in the memory modules. According to the invention, the control unit 200 comprises a configuration module 201.

The configuration module 201 is configured to set a speed Vm of the at least one drive wheel 20m.

The control unit further comprises a detecting module 202.

The detecting module 202 is configured to continuously detect actual speeds Vm1; Vc1 of the at least one drive wheel 20m and the at least one driven wheel 20c, respectively.

According to the invention, the detecting module 202 is connected to the sensor 30 and configured to detect the corresponding actual speed Vc1 of the at least one driven wheel 20c as a function of the rolling of the latter.

The technical effect achieved is the detection of the operating status of the lawn-mower, particularly the detection of an anomalous operation AW thereof.

The detecting module 202 is further configured to detect the actual speed Vm1 of the at least one drive wheel 20m.

For example, in the prior art, movement sensors for example implemented with encoders mounted directly on the drive shafts, and/or peripheral encoders mounted directly on the drive wheels and/or position and movement detection by means of accelerometers/GPS, are associated with the drive wheels 20m.

The control unit 200 comprises a first comparison module 203.

The first comparison module 203 is configured to compare the actual detected speeds Vm1; Vc1 of the at least one drive wheel 20m and the at least one driven wheel 20c, respectively; using this comparison, the first comparison module 203 determines a representative comparison value R1 of the actual detected speeds Vm1; Vc1.

In particular, this representative value R1 is obtained as the ratio between the detected speeds Vm1 (drive wheel) and Vc1 (driven wheel); in other words, R1 = Vm1/Vc1.

Alternatively, this representative value R1 is obtained as the difference between the detected speeds Vm1 (drive wheel) and Vc1 (driven wheel); in other words, R1 = Vm1-Vc1.

The control unit 200 further comprises a diagnosis module 204.

The diagnosis module 204 is further configured to identify an operating status of the lawn-mower 1, particularly a regular RW or anomalous AW operating status of the lawn-mower 1.

The diagnosis module 204 is configured to identify a regular operating status RW of the lawn-mower 1 as a function of the representative comparison value R1, if the first representative comparison value R1 substantially coincides with a predefined value R1_{PRED} representative of a regular movement RW of the lawn-mower 1.

In particular, the predefined value R1_{PRED} is a constant value of the ratio of the speed of the drive wheel Vm to the speed of the driven wheel Vc.

In a preferred embodiment, R1_{PRED} is unitary, that is, Vm/Vc = 1; in other words, in a preferred embodiment of regular operation RW, the speed Vm of the at least one drive wheel 20m coincides with the speed Vc of the at least one driven wheel 20c.

The diagnosis module 204 is further configured to identify an anomalous operating status (AW) of the lawn-mower 1 as a function of the representative comparison value R1, if the first representative comparison value R1 is different from the predefined value R1_{PRED} representative of a regular movement RW of the lawn-mower 1.

The control unit 200 comprises a second comparison module 205.

The second comparison module 205 is configured to identify, in the event of an anomalous operating status AW, a type of anomaly Ta1, Ta2, Ta3 as a combined function of the representative comparison value R1 and the predefined value R1_{PRED}.

The types of anomalies Ta1, Ta2, Ta3 identify an anomalous operation of the lawn-mower 1 relative to the movement surface S.

The first type of anomaly Ta1 indicates that the lawn-mower 1 is raised relative to the movement surface S.

The second type of anomaly Ta2 indicates that the lawn-mower 1 is sliding on the movement surface S.

The third type of anomaly Ta3 indicates that the lawn-mower has stopped after impact on the movement surface S.

According to the invention, the second comparison module 205 is configured to identify the first type Ta1 of anomaly, if:
- the actual speed Vm1 of the at least one drive wheel 20m substantially coincides with the preset speed Vm of the at least one drive wheel 20m;
- the actual speed Vm1 of the at least one drive wheel 20m is much greater than the actual speed Vc1 of the at least one driven wheel 20c.

In other words, if the preset speed Vm and the actual speed Vm1 of the at least one drive wheel 20m substantially coincide, and the actual speed Vc1 of the at least one driven wheel 20c is negligible compared to the actual speed Vm1 of the at least one drive wheel 20m, the module 205 then identifies the first type of anomaly Ta1, that is, it detects that the lawn-mower 1 is raised with respect to the movement surface S.

In yet other words, if:
- the representative comparison value R1 = Vm1/Vc1 →∞, that is, R1 <> R1_{RRED},
- with ΔV=Vm/Vm1 ≈ 1, that is, at an actual speed of movement Vm1 equal to the preset speed Vm,
- then the lawn-mower is raised.

In fact, the driven wheel 20c stops (Vc→70) after a pre-established interval of time, while the drive wheel continues to turn at the normal operating speed Vm1=Vm; given that the drive wheels are turning and the driven wheels are stopped, the ratio R1 tends to infinity.

The processing unit 200 comprises a first operational module 206.

The operational module 206 is configured to resolve the first type of anomaly Ta1.

In particular, the first operational module 206 stops the power supply to the cutting means.

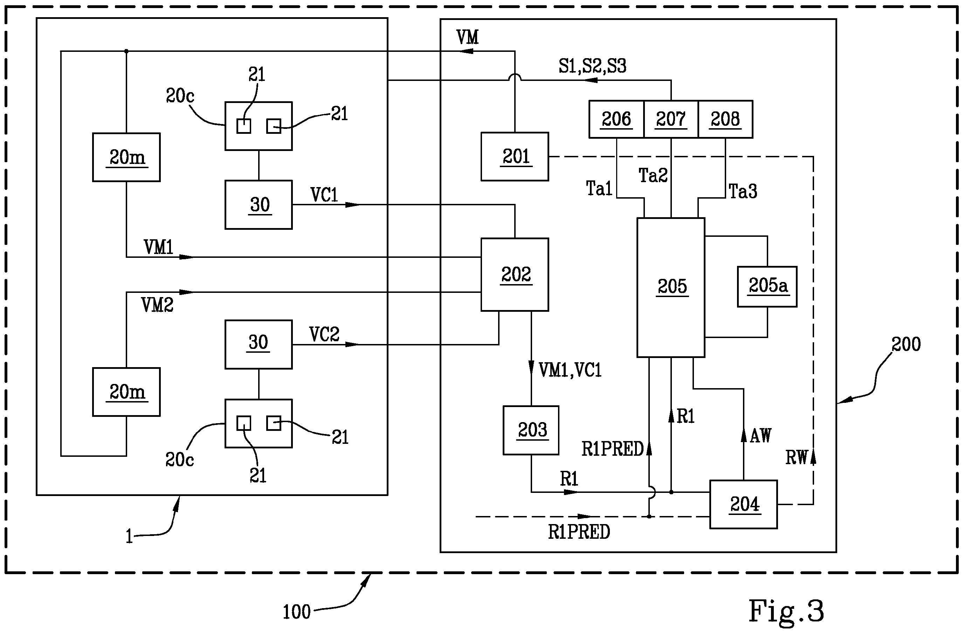

For this purpose, the first operational module 206 generates a first restoring signal S1 as shown in Figure 3.

In other words, the first operational module 206 restores operation of the lawn-mower 1 as a function of the first type of anomaly Ta1.

The technical effect achieved is that of preventing risks for the user following possible contact with the cutting means when the lawn-mower is in a raised position.

As mentioned hereinabove, the second type of anomaly Ta2 indicates that the lawn-mower 1 is sliding on the movement surface S.

According to the invention, the second comparison module 205 is configured to identify the second type of anomaly Ta2, if:
- the actual speed Vm1 of the at least one drive wheel 20m is equal to a percentage value p1 of the preset speed Vm of the at least one drive wheel 20m;
- the actual speed Vm1 of the at least one drive wheel 20m is much greater than the said actual speed Vc1 of the at least one driven wheel 20c.

In other words, if the preset speed Vm and the actual speed Vm1 of the at least one drive wheel 20m are different from a percentage value p1, and the actual speed Vc1 of the at least one driven wheel 20c is negligible compared to the actual speed Vm1 of the at least one drive wheel 20m, the module 205 then identifies the second type of anomaly Ta2, that is, it detects that the lawn-mower 1 is sliding with respect to the movement surface S.

In yet other words, if:
- the representative comparison value R1 = Vm1/Vc1 → ∞, that is, R1 <> R1_{PRED},
- with ΔV=VmNm1 >1, that is, with an actual speed Vm1 of movement of the at least one drive wheel 20m being lower than the normal operating speed Vm
- then the lawn-mower is sliding.

In fact, the at least one drive wheel 20m, though being powered, is turning with difficulty (Vm1<Vm) because the lawn-mower is stopped and the at least one driven wheel 20c is stopped (Vc1=0)

In this embodiment, the percentage p1 ranges between 20% and 5%, and preferably it is equal to 10%.

The processing unit 200 comprises a second operational module 207. This operational module 207 is configured to resolve the second type of anomaly Ta2.

In particular, the second operational module 207 is configured to command a reversal of direction of the drive wheels at half speed so as to prevent sliding and move the lawn-mower out of the anomalous position. The technical effect achieved is that of preventing useless stoppage of the lawn-mower with a resulting loss in cutting efficiency.

For this purpose, the second operational module 207 generates a second restoring signal S2, as shown in Figure 3. As mentioned hereinabove, the third type of anomaly Ta3 indicates that the lawn-mower has stopped after impact on the movement surface S.

In one embodiment, the comparison module 205 is coupled with a timer 205a.

In a preferred embodiment, the second comparison module 205 comprises the timer 205a.

In particular, the second comparison module 205 is configured to identify the third type of anomaly Ta3, if:
- at a first instant of detecting time t1, identified by said timer 205a; said actual speed Vm1 of said at least one drive wheel 20m is equal to said actual speed Vc1 of said at least one driven wheel 20c, said speeds both being not null;
- at a second instant of detecting time t_{STOP}, identified by said timer 205a and following said first instant of time t1, said actual speed Vm1 of said at least one drive wheel 20m is equal to said actual speed Vc1 of said at least one driven wheel 20c, said speeds both being null;
- said timer 205a compares the values of said first t1 and second t_{STOP} instants of time and determines a corresponding stop interval Δt1;
- said stop interval Δt1 is shorter than a predefined stop interval Δt1 PRED.

In other words, the predefined stop interval Δt1_{PRED} is representative of a standard slowing-down operation on the part of the lawn-mower 1, which does not comprise almost instantaneous stoppage determined by an impact or similar event; by way of example, this interval Δt1_{PRED} can range between 0.4 and 2 seconds.

If the detected stop interval Δt1 is shorter than Δt1_{PRED}, it means that the lawn-mower has stopped abruptly, probably following an impact.

The apparatus 100 of the invention thus detects the third type of anomaly Ta3.

The processing unit 200 comprises a third operational module 208.

The third operational module 208 is configured to resolve the third type of anomaly Ta3.

In particular, the third operational module 208 commands a reversal of direction of the drive wheels so as to move the lawn-mower out of the anomalous position.

In other words, the third operational module 208 restores operation of the lawn-mower 1 as a function of the third type of anomaly Ta3.

The technical effect achieved is that of preventing useless stoppage of the lawn-mower with a resulting loss in cutting efficiency.

For this purpose, the third operational module 208 generates a third restoring signal S3, as shown in Figure 3.

The invention also comprises a method implemented by the apparatus 100 of the invention to identify an anomalous position.

The method comprises the step of preparing an apparatus 100 for cutting grass that comprises a lawn-mower 1, as described hereinabove.

The method further comprises the step implemented by the control unit 200 and consisting of continuously controlling the movement of the lawn-mower 1, in which this step comprises
- setting the speed Vm of the at least one drive wheel 20m;
- continuously detecting the actual speeds (Vm1, Vc1) of the at least one drive wheel 20m and the at least one driven wheel 20c, respectively;
- comparing the actual speeds Vm1, Vc1 detected, thereby determining a representative comparison value R1 of these speeds;
- identifying an anomalous operating status AW of the lawn-mower 1 as a function of the representative comparison value R1, if the first representative comparison value R1 is different from a predefined value R1_{PRED} representative of a regular movement RW of said lawn-mower 1;
- identifying, in the anomalous operating status AW, a type of anomaly Ta1, Ta2, Ta3 as a combined function of the representative comparison value R1 and the predefined value R1_{PRED}.

Advantageously, according to the invention, the type of anomaly Ta1, Ta2, Ta3 identifies anomalous operation of the lawn-mower 1 relative to the movement surface S.

The method according to the invention further comprises the step of arranging permanent magnets 21 in the at least one driven wheel 20c. The method further comprises the step of monitoring a rolling of the at least one driven wheel 20c, by means of a sensor 30 mounted in said lawn-mower by detecting a shift of the permanent magnets 21.

Further steps constituting the method are referable to the specific functions of the described modules in the control unit 200.

The invention as described herein achieves a plurality of technical effects:
- it comprises a single sensor for managing the raising of the lawn-mower 1, the impact thereof with a fixed object and the sliding thereof owing to different speeds of the drive wheel and the free wheel;
- the signal emitter (magnets in the driven wheel) and the receiver (sensor) are not constrained at an exact distance and therefore the wheel can also be a wheel that pivots.
- no mechanical / electrical connection is needed between the emitter (magnets) on the driven wheel and the receiver (sensor) inside the robot.
- with respect to position detection realized using a strain gauge, the present invention enables the detection of a plurality of positions/conditions of the lawn-mower such as sliding and the stopping position following impact.

## Claims

1. A method of identifying an anomalous position of an apparatus (100) for cutting grass wherein said method comprises the steps of:
• preparing an apparatus (100) for cutting grass and comprising a lawn-mower (1) provided with one or more blades for cutting grass and a movement means (20) configured to move said lawn-mower (1) over a movement surface (S), wherein said movement means (20) comprises at least one drive wheel (20m) capable of moving at a preset speed (Vm), and at least one driven wheel (20c) capable of moving by friction with said movement surface (S) at a variable speed (Vc);
• continuously monitoring a movement of said lawn-mower (1) over said movement surface (S), wherein this step comprises:
∘ setting said preset speed (Vm) of the at least one drive wheel (20m);
wherein said monitoring step is **characterized in that** it comprises
∘ continuously detecting the actual speeds (Vm1;Vc1) of the at least one drive wheel (20m) and of the at least one driven wheel (20c), respectively;
∘ comparing the actual speeds (Vm1;Vc1) detected, thereby determining a representative comparison value (R1) of these speeds;
∘ identifying an anomalous operating status (AW) of the lawn-mower (1) as a function of the representative comparison value (R1), if the first representative comparison value (R1) is different from a predefined value (R1_{PRED}) representative of a regular movement (RW) of said lawn-mower (1);
∘ identifying, in the anomalous operating status (AW), a type of anomaly (Ta1, Ta2, Ta3) as a combined function of the representative comparison value (R1) and the predefined value (R1_{PRED}), thereby identifying an anomalous operation of the lawn-mower (1) relative to a movement surface (S).

2. The method according to claim 1, wherein said step of preparing said apparatus (100) for cutting grass comprises a step of arranging a driven wheel (20c) comprising permanent magnets (21).

3. The method according to claim 1 or 2, wherein said step of preparing said apparatus (100) for cutting grass comprises the steps of:
• arranging a sensor (30) configured to monitor a rolling of said at least one driven wheel (20c), by detecting a shift of said permanent magnets (21);
• detecting a corresponding said actual speed (Vc1) of said at least one driven wheel (20c) as a function of said rolling.

4. The method according to claim 3, comprising the step of mounting said sensor (30) in said lawn-mower (1) in proximity to said at least one driven wheel (20c).

5. The method according to claim 3 or 4, comprising the step of detecting magnetic field variations (ΔB) by means of said sensor (30) comprising a magnetic induction-type encoder, as a function of a movement of said permanent magnets (21) in said at least one driven wheel (20c), wherein said magnetic field variation (ΔB) is representative of a rolling of said driven wheel (20c).

6. The method according to any one of the preceding claims, comprising the step of identifying one type of anomaly among the following:
a first type (Ta1) of anomaly, if
• said actual speed (Vm1) substantially coincides with said preset speed (Vm) of said at least one drive wheel (20m);
• said actual speed (Vm1) is much greater than said actual speed (Vc1) of said at least one driven wheel (20c), such as to consider said actual speed (Vc1) of said at least one driven wheel (20c) negligible compared to said actual speed (Vm1) of said at least one drive wheel (20m).
a second type (Ta2) of anomaly, if
• said actual speed (Vm1) of said at least one drive wheel (20m) is equal to a percentage value (p1) of said preset speed (Vm);
• said actual speed (Vm1) of said at least one drive wheel (20m) is much greater than said actual speed (Vc1) of said at least one driven wheel (20c).

7. The method according to any one of the preceding claims, comprising the step of arranging a timer (205a) and identifying a third type (Ta3) of anomaly, if:
• at a first instant of detecting time (t1), identified by said timer (205a), said actual speed (Vm1) of said at least one drive wheel (20m) is equal to said actual speed (Vc1) of said at least one driven wheel (20c), said speeds both being not null;
• at a second instant of detecting time (t_{STOP}), identified by said timer (205a) and following said first instant of time (t1), said actual speed (Vm1) of said at least one drive wheel (20m) is equal to said actual speed (Vc1) of said at least one driven wheel (20c), said speeds both being null;
• said timer (205a) compares the values of said first (t1) and second (t_{STOP}) instants of time and determines a corresponding stop interval (Δt1);
• said stop interval (Δt1) is shorter than a predefined stop interval (Δt1_{PRED}).

8. The method according to claim 6 or 7, comprising the step of restoring operation of the lawn-mower (1) as a function of said type of detected anomaly (Ta1, Ta2, Ta3).

9. An apparatus (100) for cutting grass, adapted to implement the method of one or more of claims 1 to 8, and comprising:
• a lawn-mower (1) provided with:
∘ one or more blades for cutting grass;
∘ movement means (20) configured to move said lawn-mower (1) over a movement surface (S), wherein said movement means (20) comprises at least one drive wheel (20m) capable of moving at a preset speed (Vm), and at least one driven wheel (20c) capable of moving by friction with said movement surface (S) at a variable speed (Vc);
• a control unit (200) configured to continuously control the movement of said lawn-mower (1), wherein said control unit (200) comprises:
∘ a configuration module (201) configured to set said preset speed (Vm) of said at least one drive wheel (20m);
**characterised in that** said control unit (200) further comprise:
∘ a detecting module (202) configured to continuously detect actual speeds (Vm1;Vc1) of said at least one drive wheel (20m) and at least one driven wheel (20c), respectively;
∘ a first comparison module (203) configured to
▪ compare said actual detected speeds (Vm1; Vc1), thereby determining a representative comparison value (R1) of said actual detected speeds (Vm1; Vc1);
∘ a diagnosis module (204) configured to
▪ identify an anomalous operating status (AW) of said lawn-mower (1) as a function of said representative comparison value (R1), if said first representative comparison value (R1) is different from a predefined value (R1_{PRED}) representative of a regular movement (RW) of said lawn-mower (1);
∘ a second comparison module (205) configured to identify, in said anomalous operating status (AW), a type of anomaly (Ta1, Ta2, Ta3) as a combined function of said representative comparison value (R1) and said predefined value (R1_{PRED}), said type of anomaly (Ta1, Ta2, Ta3) identifying an anomalous operation of said lawn-mower (1) relative to said movement surface (S).

10. The apparatus (100) according to claim 9, wherein said driven wheel (20c) comprises permanent magnets (21).

11. The apparatus (100) according to claim 9 or 10, wherein said lawn-mower (1) comprises a sensor (30) configured to monitor a rolling of said at least one driven wheel (20c), by detecting a shift of said permanent magnets (21).

12. The apparatus (100) according to claim 11, wherein said detecting module (202) is connected to said sensor (30) and configured to detect a corresponding said actual speed (Vc1) of said at least one driven wheel (20c) as a function of said rolling.

13. The apparatus (100) according to claim 11 or 12, wherein said sensor (30) is mounted in said lawn-mower (1) in proximity to said at least one driven wheel (20c), and wherein said sensor (30) comprises a magnetic induction-type encoder configured to detect magnetic field variations (ΔB) as a function of a movement of said permanent magnets (21) in said at least one driven wheel (20c), where said magnetic field variation (ΔB) is representative of a rolling of said driven wheel (20c).

14. The apparatus (100) according to any one of claims 9 to 13, wherein said second comparison module (205) is configured to identify one type of anomaly among the following:
a first type /Ta1) of anomaly, if
• said actual speed (Vm1) substantially coincides with said preset speed (Vm) of said at least one drive wheel (20m);
• said actual speed (Vm1) is much greater than said actual speed (Vc1) of said at least one driven wheel (20c), such as to consider said actual speed (Vc1) of said at least one driven wheel (20c) negligible compared to said actual speed (Vm1) of said at least one drive wheel (20m).
a second type (Ta2) of anomaly, if
• said actual speed (Vm1) of said at least one drive wheel (20m) is equal to a percentage value (p1) of said preset speed (Vm);
• said actual speed (Vm1) of said at least one drive wheel (20m) is much greater than said actual speed (Vc1) of said at least one driven wheel (20c).

15. The apparatus (100) according to any one of claims 9 to 14, wherein said second comparison module (205) comprises a timer (205a) and said comparison module (205) is configured to identify a third type (Ta3) of anomaly, if:
• at a first instant of detecting time (t1), identified by said timer (205a), said actual speed (Vm1) of said at least one drive wheel (20m) is equal to said actual speed (Vc1) of said at least one driven wheel (20c), said speeds both being not null;
• at a second instant of detecting time (t_{STOP}) identified by said timer (205a) and following said first instant of time (t1), said actual speed (Vm1) of said at least one drive wheel (20m) is equal to said actual speed (Vc1) of said at least one driven wheel (20c), said speeds both being null;
• said timer (205a) compares the values of said first (t1) and second (t_{STOP}) instants of time and determines a corresponding stop interval (Δt1);
• said stop interval (Δt1) is shorter than a predefined stop interval (Δt1_{PRED}).

16. The apparatus (100) according to any one of claims 14 to 15, wherein said control unit (200) comprises an operational module (206, 207, 208) configured to restore operation of the lawn-mower (1) as a function of said type of detected anomaly (Ta1, Ta2, Ta3).

## Patentansprüche

1. Verfahren zum Identifizieren einer anormalen Position einer Vorrichtung (100) zum Schneiden von Gras, wobei dieses Verfahren die folgenden Schritte umfasst:
• Vorbereiten einer Vorrichtung (100) zum Schneiden von Gras, umfassend einen Rasenmäher (1), versehen mit einem oder mehreren Messern zum Schneiden von Gras und mit Bewegungsmitteln (20), die ausgelegt sind, um den Rasenmäher (1) über eine Bewegungsoberfläche (S) zu bewegen, wobei die Bewegungsmittel (20) mindestens ein Antriebsrad (20m) umfassen, das in der Lage ist, sich bei einer vorgegebenen Geschwindigkeit (Vm) zu bewegen, und mindestens ein angetriebenes Rad (20c), das in der Lade ist, sich durch Reibung mit der Bewegungsoberfläche (S) bei einer variablen Geschwindigkeit (Vc) zu bewegen;
• kontinuierliches Überwachen einer Bewegung des Rasenmähers (1) über die Bewegungsoberfläche (S), wobei dieser Schritt umfasst:
- Einstellen der vorgegebenen Geschwindigkeit (Vm) des mindestens einen Antriebsrads (20m),
wobei der Schritt zum Überwachen **dadurch gekennzeichnet ist, dass** er umfasst:
- kontinuierliches Erfassen der Ist-Geschwindigkeiten (Vm1; Vc1) jeweils des mindestens einen Antriebsrads (20m) und des mindestens einen angetriebenen Rads (20c);
- Vergleichen der erfassten Ist-Geschwindigkeiten (Vm1; Vc1) und hierdurch Ermitteln eines repräsentativen Vergleichswerts (R1) dieser Geschwindigkeiten;
- Identifizieren eines anormalen Betriebszustands (AW) des Rasenmähers (1) als eine Funktion des repräsentativen Vergleichswerts (R1), wenn der erste repräsentative Vergleichswert (R1) anders ist als ein vorgegebener Wert (R1_{PRED}), der für eine reguläre Bewegung (RW) des Rasenmähers (1) repräsentativ ist;
- Identifizieren eines Störungstyps (Ta1, Ta2, Ta3) im anormalen Betriebszustand (AW) als eine kombinierte Funktion des repräsentativen Vergleichswerts (R1) und des vorgegebenen Werts (R1_{PRED}), wodurch ein anormaler Betrieb des Rasenmähers (1) relativ zu einer Bewegungsoberfläche (S) identifiziert wird.

2. Verfahren nach Anspruch 1, wobei der Schritt zum Vorbereiten der Vorrichtung (100) zum Schneiden von Gras einen Schritt zum Anordnen eines angetriebenen Rads (20c), umfassend Permanentmagneten (21), umfasst.

3. Verfahren nach Anspruch 1 oder 2, wobei der Schritt zum Vorbereiten der Vorrichtung (100) zum Schneiden von Gras die folgenden Schritte umfasst:
• Anordnen eines Sensors (30), der ausgelegt ist, um ein Rollen des mindestens einen angetriebenen Rads (20c) durch Erfassen einer Verschiebung der Permanentmagneten (21) zu überwachen;
• Erfassen einer entsprechenden Ist-Geschwindigkeit (Vc1) des mindestens einen angetriebenen Rads (20c) als eine Funktion dieses Rollens.

4. Verfahren nach Anspruch 3, umfassend den Schritt zum Montieren des Sensors (30) im Rasenmäher (1) in der Nähe des mindestens einen angetriebenen Rads (20c).

5. Verfahren nach Anspruch 3 oder 4, umfassend den Schritt zum Erfassen von Magnetfeldänderungen (ΔB) mittels des Sensors (30), umfassend einen Encoder vom Magnetinduktionstyp, als eine Funktion einer Bewegung der Permanentmagneten (21) im mindestens einen angetriebenen Rad (20c), wobei die Magnetfeldänderung (ΔB) repräsentativ für ein Rollen des angetriebenen Rads (20c) ist.

6. Verfahren nach einem der vorhergehenden Ansprüche, umfassend den Schritt zum Identifizieren eines der folgenden Störungstypen:
eines ersten Störungstyps (Ta1), wenn
• die Ist-Geschwindigkeit (Vm1) im Wesentlichen mit der vorgegebenen Geschwindigkeit (Vm) des mindestens einen Antriebsrads (20m) übereinstimmt;
• die Ist-Geschwindigkeit (Vm1) viel größer ist als die Ist-Geschwindigkeit (Vc1) des mindestens einen angetriebenen Rads (20c), sodass die Ist-Geschwindigkeit (Vc1) des mindestens einen angetriebenen Rads (20c) im Vergleich zur Ist-Geschwindigkeit (Vm1) des mindestens einen Antriebsrads (20m) als unerheblich eingestuft werden kann;
eines zweiten Störungstyps (Ta2), wenn
• die Ist-Geschwindigkeit (Vm1) des mindestens einen Antriebsrads (20m) gleich einem Prozentwert (p1) der vorgegebenen Geschwindigkeit (Vm) ist;
• die Ist-Geschwindigkeit (Vm1) des mindestens einen Antriebsrads (20m) viel größer ist als die Ist-Geschwindigkeit (Vc1) des mindestens einen angetriebenen Rads (20c).

7. Verfahren nach einem der vorhergehenden Ansprüche, umfassend den Schritt zum Anordnen einer Zeitschaltuhr (205a) und zum Identifizieren eines dritten Störungstyps (Ta3), wenn
• die Ist-Geschwindigkeit (Vm1) des mindestens einen Antriebsrads (20m) in einem ersten, von der Zeitschaltuhr (205a) erfassten Erfassungszeitaugenblick (t1) gleich der Ist-Geschwindigkeit (Vc1) des mindestens einen angetriebenen Rads (20c) ist, wobei beide Geschwindigkeiten nicht null sind;
• die Ist-Geschwindigkeit (Vm1) des mindestens einen Antriebsrads (20m) in einem zweiten Erfassungszeitaugenblick (T_{STOP}) identifiziert durch die Zeitschaltuhr (205a) und folgend auf den ersten Zeitaugenblick (t1), gleich der Ist-Geschwindigkeit (Vc1) des mindestens einen angetriebenen Rads (20c) ist, wobei beide Geschwindigkeiten gleich null sind;
• die Zeitschaltuhr (205a) die Werte des ersten Zeitaugenblicks (t1) und des zweiten Zeitaugenblicks (T_{STOP}) vergleicht und ein entsprechendes Stoppintervall (Δt1) ermittelt;
• das Stoppintervall (Δt1) kürzer ist als ein vorgegebenes Stoppintervall (Δt1_{PRED}).

8. Verfahren nach Anspruch 6 oder 7, umfassend den Schritt zum Wiederherstellen des Betriebs des Rasenmähers (1) als eine Funktion des Typs der erfassten Störung (Ta1, Ta2, Ta3).

9. Vorrichtung (100) zum Schneiden von Gras, ausgelegt, um das Verfahren nach einem oder mehreren der Ansprüche 1 bis 8 zu implementieren und umfassend:
• einen Rasenmäher (1), versehen mit:
- einem oder mehreren Messern zum Schneiden von Gras;
• Bewegungsmittel (20), die ausgelegt sind, um den Rasenmäher (1) über eine Bewegungsoberfläche (S) zu bewegen, wobei die Bewegungsmittel (20) mindestens ein Antriebsrad (20m) umfassen, das in der Lage ist, sich bei einer vorgegebenen Geschwindigkeit (Vm) zu bewegen, und mindestens ein angetriebenes Rad (20c), das in der Lade ist, sich durch Reibung mit der Bewegungsoberfläche (S) bei einer variablen Geschwindigkeit (Vc) zu bewegen;
• ein Steuergerät (200), das ausgelegt ist, um die Bewegung des Rasenmähers (1) kontinuierlich zu überwachen, wobei das Steuergerät (200) umfasst:
• ein Konfigurationsmodul (201), das ausgelegt ist, um die vorgegebene Geschwindigkeit (Vm) des mindestens einen Antriebsrads (20m) einzustellen,
**dadurch gekennzeichnet, dass** das Steuergerät (200) zudem umfasst:
- ein Erfassungsmodul (202), das ausgelegt ist, um kontinuierlich Ist-Geschwindigkeiten (Vm1; Vc1) jeweils des mindestens einen Antriebsrads (20m) und des mindestens einen angetriebenen Rads (20c) zu erfassen;
- ein erstes Vergleichsmodul (203), das ausgelegt ist, um
• die erfassten Ist-Geschwindigkeiten (Vm1; Vc1) zu vergleichen und hierdurch einen repräsentativen Vergleichswerts (R1) der erfassten Ist-Geschwindigkeiten (Vm1; Vc1) zu ermitteln;
- ein Diagnosemodul (204), das ausgelegt ist, um
- einen anormalen Betriebszustand (AW) des Rasenmähers (1) als eine Funktion des repräsentativen Vergleichswerts (R1) zu identifizieren, wenn der erste repräsentative Vergleichswert (R1) anders ist als ein vorgegebener Wert (R1_{PRED}), der für eine reguläre Bewegung (RW) des Rasenmähers (1) repräsentativ ist;
- ein zweites Vergleichsmodul (205), das ausgelegt ist, um einen Störungstyp (Ta1, Ta2, Ta3) im anormalen Betriebszustand (AW) als eine kombinierte Funktion des repräsentativen Vergleichswerts (R1) und des vorgegebenen Werts (R1_{PRED})zu identifizieren, wobei der Störungstyp (Ta1, Ta2, Ta3) einen anormaler Betrieb des Rasenmähers (1) relativ zur Bewegungsoberfläche (S) identifiziert.

10. Vorrichtung (100) nach Anspruch 9, wobei das angetriebene Rad (20c) Permanentmagneten (21) umfasst.

11. Vorrichtung (100) nach Anspruch 9 oder 10, wobei der Rasenmäher (1) einen Sensor (30) umfasst, der ausgelegt ist, um ein Rollen des mindestens einen angetriebenen Rads (20c) durch Erfassen einer Verschiebung der Permanentmagneten (21) zu überwachen.

12. Vorrichtung (100) nach Anspruch 11, wobei das Erfassungsmodul (202) mit dem Sensor (30) verbunden und ausgelegt ist, um eine entsprechende Ist-Geschwindigkeit (Vc1) des mindestens einen angetriebenen Rads (20c) als eine Funktion dieses Rollens zu erfassen.

13. Vorrichtung (100) nach Anspruch 11 oder 12, wobei der Sensor (30) im Rasenmäher (1) in der Nähe des mindestens einen angetriebenen Rads (20c) montiert ist und wobei der Sensor (30) einen Encoder vom Magnetinduktionstyp umfasst, der ausgelegt ist, um Magnetfeldänderungen (ΔB) als eine Funktion einer Bewegung der Permanentmagneten (21) im mindestens einen angetriebenen Rad (20c) zu erfassen, wobei die Magnetfeldänderung (ΔB) repräsentativ für ein Rollen des angetriebenen Rads (20c) ist.

14. Vorrichtung (100) nach einem der Ansprüche 9 bis 13, wobei das zweite Vergleichsmodul (205) ausgelegt ist, um einen der folgenden Störungstypen zu identifizieren:
einen ersten Störungstyp (Ta1), wenn
• die Ist-Geschwindigkeit (Vm1) im Wesentlichen mit der vorgegebenen Geschwindigkeit (Vm) des mindestens einen Antriebsrads (20m) übereinstimmt;
• die Ist-Geschwindigkeit (Vm1) viel größer ist als die Ist-Geschwindigkeit (Vc1) des mindestens einen angetriebenen Rads (20c), sodass die Ist-Geschwindigkeit (Vc1) des mindestens einen angetriebenen Rads (20c) im Vergleich zur Ist-Geschwindigkeit (Vm1) des mindestens einen Antriebsrads (20m) als unerheblich eingestuft werden kann;
einen zweiten Störungstyp (Ta2), wenn
• die Ist-Geschwindigkeit (Vm1) des mindestens einen Antriebsrads (20m) gleich einem Prozentwert (p1) der vorgegebenen Geschwindigkeit (Vm) ist;
• die Ist-Geschwindigkeit (Vm1) des mindestens einen Antriebsrads (20m) viel größer ist als die Ist-Geschwindigkeit (Vc1) des mindestens einen angetriebenen Rads (20c).

15. Vorrichtung (100) nach einem der Ansprüche 9 bis 14, wobei das zweite Vergleichsmodul (205) eine Zeitschaltuhr (205a) umfasst und das Vergleichsmodul (205) ausgelegt ist, um einen dritten Störungstyp (Ta3) zu identifizieren, wenn
• die Ist-Geschwindigkeit (Vm1) des mindestens einen Antriebsrads (20m) in einem ersten, von der Zeitschaltuhr (205a) erfassten Erfassungszeitaugenblick (t1) gleich der Ist-Geschwindigkeit (Vc1) des mindestens einen angetriebenen Rads (20c) ist, wobei beide Geschwindigkeiten nicht null sind;
• die Ist-Geschwindigkeit (Vm1) des mindestens einen Antriebsrads (20m) in einem zweiten Erfassungszeitaugenblick (T_{STOP}) identifiziert durch die Zeitschaltuhr (205a) und folgend auf den ersten Zeitaugenblick (t1), gleich der Ist-Geschwindigkeit (Vc1) des mindestens einen angetriebenen Rads (20c) ist, wobei beide Geschwindigkeiten gleich null sind;
• die Zeitschaltuhr (205a) die Werte des ersten Zeitaugenblicks (t1) und des zweiten Zeitaugenblicks (T_{STOP}) vergleicht und ein entsprechendes Stoppintervall (Δt1) ermittelt;
• das Stoppintervall (Δt1) kürzer ist als ein vorgegebenes Stoppintervall (Δt1_{PRED}).

16. Vorrichtung (100) nach einem der Ansprüche 14 bis 15, wobei das Steuergerät (200) ein Betriebsmodul (206, 207, 208) umfasst, das ausgelegt ist, um den Betrieb des Rasenmähers (1) als eine Funktion des erfassten Störungstyps (Ta1, Ta2, Ta3) wiederherzustellen.

## Revendications

1. Méthode d'identification d'une position anormale d'un appareil (100) pour couper l'herbe, dans lequel ledit méthode comprend les étapes de :
• préparer un appareil (100) pour couper l'herbe et comprenant une tondeuse à gazon (1) équipée d'une ou plusieurs lames pour couper l'herbe et un moyen de déplacement (20) configuré pour déplacer ladite tondeuse à gazon (1) sur une surface de déplacement (S), dans lequel ledit moyen de déplacement (20) comprend au moins une roue d'entraînement (20m) pouvant se déplacer à une vitesse prédéfinie (Vm), et au moins une roue menée (20c) pouvant se déplacer par frottement avec ladite surface de déplacement (S) à une vitesse variable (Vc) ;
• surveiller en permanence un déplacement de ladite tondeuse à gazon (1) sur ladite surface de déplacement (S), dans lequel cette étape comprend :
- fixer ladite vitesse prédéfinie (Vm) de l'au moins une roue d'entraînement (20m) ;
dans lequel ladite étape de surveillance est **caractérisée en ce qu'**elle comprend
- détecter en permanence les vitesses réelles (Vm1 ; Vc1), respectivement, de l'au moins une roue d'entraînement (20m) et de l'au moins une roue menée (20c) ;
- comparer les vitesses réelles (Vm1 ; Vc1) détectées, déterminant ainsi une valeur de comparaison représentative (R1) de ces vitesses ;
- identifier un état de fonctionnement anormal (AW) de la tondeuse à gazon (1) en fonction de la valeur de comparaison représentative (R1) si la première valeur de comparaison représentative (R1) est différente d'une valeur prédéfinie (R1_{PRED})représentative d'un déplacement régulier (RW) de ladite tondeuse à gazon (1) ;
- identifier, dans l'état de fonctionnement anormal (AW), un type d'anomalie (Ta1, Ta2, Ta3) comme étant une fonction combinée de la valeur de comparaison représentative (R1) et de la valeur prédéfinie (R1_{PRED}) , identifiant ainsi un fonctionnement anormal de la tondeuse à gazon (1) par rapport à une surface de déplacement (S).

2. Méthode selon la revendication 1, dans lequel ladite étape consistant à préparer ledit appareil (100) pour couper l'herbe comprend une étape consistant à disposer une roue menée (20c) comprenant des aimants permanents (21) .

3. Méthode selon la revendication 1 ou 2, dans lequel ladite étape consistant à préparer ledit appareil (100) pour couper l'herbe comprend les étapes de :
• disposer un capteur (30) configuré pour surveiller un roulement de ladite au moins une roue menée (20c) en détectant un déplacement desdits aimants permanents (21) ;
• détecter une dite vitesse réelle (Vc1) correspondante de l'au moins une roue menée (20c) en fonction dudit roulement.

4. Méthode selon la revendication 3, comprenant l'étape consistant à monter ledit capteur (30) dans ladite tondeuse à gazon (1) à proximité de ladite au moins une roue menée (20c).

5. Méthode selon la revendication 3 ou 4, comprenant l'étape consistant à détecter des variations de champ magnétique (ΔB) au moyen dudit capteur (30) comprenant un encodeur à induction magnétique en fonction d'un mouvement desdits aimants permanents (21) dans ladite au moins une roue menée (20c), dans lequel ladite variation de champ magnétique (ΔB) est représentative d'un roulement de ladite roue menée (20c).

6. Méthode selon l'une quelconque des revendications précédentes, comprenant l'étape consistant à identifier un type d'anomalie parmi les suivantes :
un premier type (Ta1) d'anomalie, si
• ladite vitesse réelle (Vm1) coïncide substantiellement à ladite vitesse préétablie (Vm) de ladite au moins une roue d'entraînement (20m) ;
• ladite vitesse réelle (Vm1) est nettement supérieure à ladite vitesse réelle (Vc1) de ladite au moins une roue menée (20c) de sorte à considérer ladite vitesse réelle (Vc1) de ladite au moins une roue menée (20c) négligeable comparée à ladite vitesse réelle (Vm1) de ladite au moins une roue d'entraînement (20m),
un second type (Ta2) d'anomalie, si
• ladite vitesse réelle (Vm1) de ladite au moins une roue d'entraînement (20m) est égale à une valeur du pourcentage (p1) de ladite vitesse prédéfinie (Vm) ;
• ladite vitesse réelle (Vm1) de ladite au moins une roue d'entraînement (20m) est nettement supérieure à ladite vitesse réelle (Vc1) de ladite au moins une roue menée (20c).

7. Méthode selon l'une quelconque des revendications précédentes, comprenant l'étape consistant à disposer un temporisateur (205a) et à identifier un troisième type (Ta3) d'anomalie, si :
• à un premier instant de temps de détection (t1), identifié par ledit temporisateur (205a), ladite vitesse réelle (Vm1) de ladite au moins une roue d'entraînement (20m) est égale à ladite vitesse réelle (Vc1) de ladite au moins une roue menée (20c), lesdites deux vitesses étant non nulles ;
• à un second instant de temps de détection (t_{STOP}) , identifié par ledit temporisateur (205a), et suivant ledit premier instant de temps (t1), ladite vitesse réelle (Vm1) de ladite au moins une roue d'entraînement (20m) est égale à ladite vitesse réelle (Vc1) de ladite au moins une roue menée (20c), lesdites deux vitesses étant nulles ;
• ledit temporisateur (205a) compare les valeurs desdits premier (t1) et second (t_{STOP}) instants de temps et détermine un intervalle d'arrêt (Δt1) correspondant ;
• ledit intervalle d'arrêt (Δt1) est plus court qu'un intervalle d'arrêt prédéfini (Δt1_{PRED}).

8. Méthode selon la revendication 6 ou 7, comprenant l'étape consistant à rétablir le fonctionnement de la tondeuse à gazon (1) en fonction du type d'anomalie détecté (Ta1, Ta2, Ta3).

9. Appareil (100) pour couper l'herbe, pouvant mettre en oeuvre la méthode selon l'une ou plusieurs des revendications de 1 à 8, et comprenant :
• une tondeuse à gazon (1) équipée :
- d'une ou plusieurs lames pour couper l'herbe ;
- d'un moyen de déplacement (20) configuré pour déplacer ladite tondeuse à gazon (1) sur une surface de déplacement (S), dans lequel ledit moyen de déplacement (20) comprend au moins une roue d'entraînement (20m) pouvant se déplacer à une vitesse prédéfinie (Vm), et au moins une roue menée (20c) pouvant se déplacer par frottement avec ladite surface de déplacement (S) à une vitesse variable (Vc) ;
• une unité de commande (200) configurée pour commander en permanence le déplacement de ladite tondeuse à gazon (1), dans lequel ladite unité de commande (200) comprend :
- un module de configuration (201) configuré pour fixer ladite vitesse préétablie (Vm) de ladite au moins une roue d'entraînement (20m) ;
**caractérisé en ce que** ladite unité de commande (200) comprend de plus :
- un module de détection (202) configuré pour détecter en permanence les vitesses réelles (Vm1 ; Vc1), respectivement, de l'au moins une roue d'entraînement (20m) et de l'au moins une roue menée (20c) ;
- un premier module de comparaison (203) configuré pour
• comparer lesdites vitesses réelles détectées (Vm1; Vc1), déterminant ainsi une valeur de comparaison représentative (R1) desdites vitesses réelles détectées (Vm1 ; Vc1) ;
- un module de diagnostic (204) configuré pour
• identifier un état de fonctionnement anormal (AW) de ladite tondeuse à gazon (1) en fonction de ladite valeur de comparaison représentative (R1), si ladite première valeur de comparaison représentative (R1) est différente d'une valeur prédéfinie (R1_{PRED}) représentative d'un déplacement régulier (RW) de ladite tondeuse à gazon (1) ;
- un second module de comparaison (205) configuré pour identifier, dans ledit état de fonctionnement anormal (AW), un type d'anomalie (Ta1, Ta2, Ta3) comme étant une fonction combinée de ladite valeur de comparaison représentative (R1) et de ladite valeur prédéfinie (R1_{PRED}) , ledit type d'anomalie (Ta1, Ta2, Ta3) identifiant un fonctionnement anormal de la tondeuse à gazon (1) par rapport à ladite surface de déplacement (S) .

10. Appareil (100) selon la revendication 9, dans lequel ladite roue menée (20c) comprend des aimants permanents (21) .

11. Appareil (100) selon la revendication 9 ou 10, dans lequel ladite tondeuse à gazon (1) comprend un capteur (30) configuré pour surveiller un roulement de ladite au moins une roue menée (20c) en détectant un déplacement desdits aimants permanents (21).

12. Appareil (100) selon la revendication 11, dans lequel ledit module de détection (202) est relié au dit capteur (30) et configuré pour détecter ladite vitesse réelle (Vc1) correspondante de l'au moins une roue menée (20c) en fonction dudit roulement.

13. Appareil (100) selon la revendication 11 ou 12, dans lequel ledit capteur (30) est monté dans ladite tondeuse à gazon (1) à proximité de ladite au moins une roue menée (20c), et dans lequel ledit capteur (30) comprend un encodeur à induction magnétique configuré pour détecter des variations de champ magnétique (ΔB) en fonction d'un mouvement desdits aimants permanents (21) dans ladite au moins une roue menée (20c), où ladite variation de champ magnétique (ΔB) est représentative d'un roulement de ladite roue menée (20c) .

14. Appareil (100) selon l'une quelconque des revendications de 9 à 13, dans lequel ledit second module de comparaison (205) est configuré pour identifier un type d'anomalie parmi les suivantes :
un premier type (Ta1) d'anomalie, si
• ladite vitesse réelle (Vm1) coïncide substantiellement à ladite vitesse préétablie (Vm) de ladite au moins une roue d'entraînement (20m) ;
• ladite vitesse réelle (Vm1) est nettement supérieure à ladite vitesse réelle (Vc1) de ladite au moins une roue menée (20c) de sorte à considérer ladite vitesse réelle (Vc1) de ladite au moins une roue menée (20c) négligeable comparée à ladite vitesse réelle (Vm1) de ladite au moins une roue d'entraînement (20m),
un second type (Ta2) d'anomalie, si
• ladite vitesse réelle (Vm1) de ladite au moins une roue d'entraînement (20m) est égale à une valeur du pourcentage (p1) de ladite vitesse prédéfinie (Vm) ;
• ladite vitesse réelle (Vm1) de ladite au moins une roue d'entraînement (20m) est nettement supérieure à ladite vitesse réelle (Vc1) de ladite au moins une roue menée (20c).

15. Appareil (100) selon l'une quelconque des revendications de 9 à 14, dans lequel ledit second module de comparaison (205) comprend un temporisateur (205a) et ledit module de comparaison (205) est configuré pour identifier un troisième type (Ta3) d'anomalie, si :
• à un premier instant de temps de détection (t1), identifié par ledit temporisateur (205a), ladite vitesse réelle (Vm1) de ladite au moins une roue d'entraînement (20m) est égale à ladite vitesse réelle (Vc1) de ladite au moins une roue menée (20c), lesdites deux vitesses étant non nulles ;
• à un second instant de temps de détection (t_{STOP}) , identifié par ledit temporisateur (205a), et suivant ledit premier instant de temps (t1), ladite vitesse réelle (Vm1) de ladite au moins une roue d'entraînement (20m) est égale à ladite vitesse réelle (Vc1) de ladite au moins une roue menée (20c), lesdites deux vitesses étant nulles ;
• ledit temporisateur (205a) compare les valeurs desdits premier (t1) et second (t_{STOP}) instants de temps et détermine un intervalle d'arrêt (Δt1) correspondant ;
• ledit intervalle d'arrêt (Δt1) est plus court qu'un intervalle d'arrêt prédéfini (Δt1_{PRED}).

16. Appareil (100) selon l'une quelconque des revendications de 14 à 15, dans lequel ladite unité de commande (200) comprend un module opérationnel (206, 207, 208) configuré pour rétablir le fonctionnement de la tondeuse à gazon (1) en fonction dudit type d'anomalie détecté (Ta1, Ta2, Ta3).
